(19) Europäisches Patentamt
European Patent Office
Office européen des brevets

(11) **EP 4 578 707 A1**

(12) **EUROPEAN PATENT APPLICATION**

(43) Date of publication:
**02.07.2025 Bulletin 2025/27**

(21) Application number: **24219489.2**

(22) Date of filing: **12.12.2024**

(51) International Patent Classification (IPC):
***B60L 15/20*** *(2006.01)*

(52) Cooperative Patent Classification (CPC):
**B60L 15/2036;** B60L 2220/42; B60L 2240/24;
B60L 2240/423; B60L 2240/425; B60L 2260/44

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 JP 2023220469**

(71) Applicant: **TOYOTA JIDOSHA KABUSHIKI
KAISHA
Aichi-ken, 471-8571 (JP)**

(72) Inventors:
• **OHNO, Koh
Toyota-shi, Aichi, 471-8571 (JP)**
• **YAMAKAWA, Toshifumi
Toyota-shi, Aichi, 471-8571 (JP)**
• **HANADA, Hideto
Toyota-shi, Aichi, 471-8571 (JP)**

(74) Representative: **Winter, Brandl - Partnerschaft
mbB
Alois-Steinecker-Straße 22
85354 Freising (DE)**

(54) **CONTROL SYSTEM FOR ELECTRIC VEHICLE**

(57) A control system for an electric vehicle (Ve) configured to control output torques of each motor (1, 2, 3, 4) independently so as to improve a running stability and a control stability. Each of the motors (1, 2, 3, 4) is connected individually to one of wheels (11, 12, 13, 14) so that drive forces established by the wheels are controlled independently by controlling output torques of motors (1, 2, 3, 4) independently. A control unit (6) is configured to: calculate estimated parameters of the motors (1, 2, 3, 4); select a reference motor; calculate a difference between the estimated parameters of the reference motor (1, 2, 3, 4) and other motor (1, 2, 3, 4); and control the torques of the motors (1, 2, 3, 4) to reduce a difference between the torques of the reference motor (1, 2, 3, 4) and other motor (1, 2, 3, 4).

FIG. 1

## Description

## CROSS-REFERENCE TO RELATED APPLICATIONS

The present invention claims the benefit of Japanese Patent Application No. 2023-220469 filed on December 27, 2023 with the Japanese Patent Office.

## BACKGROUND

## Field of the Invention

Embodiments of the present invention relate to the art of a control system for an electric vehicle in which a prime mover includes a plurality of motors.

## Discussion of the Related Art

JP-B2-3467961 discloses one example of a control system for a motor that controls the motor to generate a torque accurately corresponding to a torque command even if temperature increases. According to the teachings of JP-B2-3467961, the control system is configured to control the motor to generate a desired torque while compensating demagnetization due to temperature rise. To this end, the control system estimates a change in a magnetic flux (i.e., demagnetization characteristics) according to a temperature of an interlinkage magnetic flux in a permanent magnet of a PM motor, and corrects a torque current command based on the estimated change in the magnetic flux. Specifically, the control system calculates an estimate value of the interlinkage magnetic flux using a voltage equation in a rotating coordinate (i.e., a dq coordinate) of the PM motor, and corrects a magnetization current command value and the torque current command value using the estimate value of the interlinkage magnetic flux and a motor model (i.e., a simulator simulating a motor equivalent to the PM motor).

The electric vehicle to which the control system according to the present invention is applied is provided with at least two motors individually serving as a prime mover. For example, in the electric vehicle, one of the motors may be arranged to drive a pair of front wheels and the other motor may be arranged to drive a pair of rear wheels. In this case, a drive force to rotate the front wheels and a drive force to rotate the rear wheels may be controlled separately. Otherwise, one of the motors may be arranged to drive a pair of right wheels and the other motor may be arranged to drive a pair of left wheels. In this case, a drive force to rotate the right wheels and a drive force to rotate the left wheels may be controlled separately. Instead, four motors may be arranged in the electric vehicle to drive each of the wheels independently. In this case, drive forces to rotate the wheels may be controlled separately.

In the electric vehicle of this kind, it is necessary to control a plurality of the motors separately and accurately so as to improve a straight-running stability and a turning performance. However, in the synchronous motor using a permanent magnet, a flux density of the magnet is changed due to a temperature change in the motor, and consequently, output characteristics of the motor is changed by the change in the magnet flux. Such change in the output characteristics of the motors differ from one motor to another, and in addition, the control of the motor torque is susceptible to an absolute error. Therefore, if the output characteristics of e.g., the right motor and the left motor are different from each other, a straight-running stability of the electric vehicle will be reduced. In addition, if the output characteristics of the right motor and the left motor or the front motor and the rear motor are different from each other during turning, a turning performance of the electric vehicle may be reduced. Thus, if the output characteristics of the motors are different, the straight-running stability and the turning performance of the electric vehicle will be reduced. In order to control the drive force established by the output torques of each of the motors, as described in JP-B2-3467961, a difference between the output characteristics of the motors may be obtained by estimating a change in the magnetic flux of each of the motors according to a temperature change using the voltage equation. Instead, a difference between the output characteristics of the motors may also be obtained by a regression analysis method using a least squares method, or by a parameter estimating method such as a sequential estimation using a sequential least squares method and a Kalman filter.

However, as described, such estimation of the magnet flux of motors are affected by an individual difference of the motors and a model error of motors other than the motors whose magnetic flux are to be estimated. Therefore, it is difficult to accurately estimate a difference between the output characteristics of the motors. According to the teachings of JP-B2-3467961, in order to estimate a magnet flux and an error of a current sensor, a parameter is estimated based on a difference between a voltage equation or a plant model and an actual measured value or a command value. Therefore, if an error other than the parameter to be estimated exists in the voltage equation or the plant model, a difference between the actual measured value and the command value may not be calculated accurately thereby causing an estimate error of the magnet flux.

For example, in order to calculate an error $\Delta a$ of a constant "a" in the following equation

$$y = ax + b,$$

where "y" is an objective variable and "x" is an independent variable, based on nominal values of known constants "a" and "b", the error $\Delta a$ may be calculated by transforming the following equation

$$y = (a + \Delta a) x + b$$

into the following equation

$$\Delta a = (y - ax - b) / x.$$

Given that an unmeasurable (i.e., inevitable) model error "e" exists in the above equation, an estimate value $\Delta a_{est}$ of the error $\Delta a$ may be calculated by adding "e" to "y" as expressed by the following equation

$$\Delta a_{est} = (y + e - ax - b) / x = \Delta a + e / x.$$

Consequently, $\Delta a_{est}$ will be unequal to $\Delta a$ as expressed by the following equation

$$\Delta a_{est} \neq \Delta a.$$

That is, $\Delta a$ or the model parameter $(a + \Delta a)$ may not be calculated accurately.

Thus, in the electric vehicle having a plurality of motors to drive wheels independently, magnet fluxes in the motors vary differently with temperature change. Therefore, characteristics of the motors vary in different manner, and output torques of the motors may not be controlled properly due to such different change in the characteristics of the motors. Consequently, a running stability and a control stability of the electric vehicle may be reduced.

## SUMMARY

Aspects of embodiments of the present invention have been conceived noting the foregoing technical problems, and it is therefore an object of the present invention to provide a control system for an electric vehicle configured to control output torques of each of the motors properly so as to improve a running stability and a control stability of the electric vehicle.

The present invention relates to the art of a control system for an electric vehicle in which a plurality of motors are connected each to of the respective wheels. Each of the motors generates torque in accordance with its own characteristics, and a drive force established by each of the wheels driven by the motor is controlled independently by controlling an output torque of each of the motors independently. In order to achieve the above-explained objective, according to the exemplary embodiment of the present invention, the control system is provided with a control unit for controlling the electric vehicle and the motors. Specifically, the control unit comprises: a parameter estimator that is configured to calculate estimated parameters relating to the characteristics of the motors using a predetermined estimation method; a reference motor selector that is configured to select a reference motor from the motors; a characteristic difference calculator that is configured to calculate a relative difference between the estimated parameter of the reference motor and the estimated parameters of other motor; and a motor torque controller that is configured to control the torque of at least any one of the motors so as to reduce a difference between the torques of the reference motor and other motor resulting from the relative difference between the estimated parameters of the reference motor and other motor.

In a non-limiting embodiment, the parameter estimator may calculate at least any one of an estimated output torque of each of the motors, an estimated input powers to each of the motors, and an estimated torque constant of each of the motors. In addition, the motor torque controller may correct predetermined control target values of the motors to reduce the difference between the torques of the reference motor and other motor resulting from a difference between the estimated output torques of the reference motor and other motor, between the estimated input powers to the reference motor and other motor, or between the estimated torque constants of the reference motor and other motor.

In a non-limiting embodiment, a permanent magnet synchronous motor may be adopted as each of the motors respectively. The parameter estimator may calculate magnet fluxes in the motors, and the characteristic difference calculator may calculate a difference between the magnet flux of the reference motor and the magnet flux of other motor. In addition, the motor torque controller may correct current values of the motors to eliminate the difference between the magnet fluxes of the reference motor and other motor thereby reducing the difference between the torques of the reference motor and other motor resulting from such differences between the magnet fluxes.

Thus, the control system according to the exemplary embodiment of the present invention is applied to the electric vehicle in which a pair of front a pair of rear wheels, or all of the wheels are driven independently by its dedicated motors. The control system according to the exemplary embodiment of the present invention calculates the estimated parameters of the motors such as the output characteristics, the torque characteristics, and the thermal characteristics of those motors using the conventional parameter estimating method such as the ordinary least squares method and the maximum likelihood estimation method. Then, the control system calculates a difference between the estimated parameter of the reference motor selected form the motors and the estimated parameter of other motor. Thereafter, the control system controls the motors to reduce the differences between the torque of the reference motor and the torque of other motor derived from the differences in the estimated parameters. The estimated parameter calculated using the conventional parameter estimation method contains an inevitable estimation error derived from a measurement error and a model error. According to the exemplary embodiment of the present invention, the control system calculates the relative difference between the estimated parameter of the reference motor and the estimated parameter of other motor to eliminate such estimation errors from the estimated parameters. Therefore, the motors may be controlled accurately so that the drive force to propel the vehicle Ve is controlled properly.

Specifically, the parameter estimator calculates estimated torques of the motors, estimated input powers to the motors, or estimated torque constants of the motors. Then, the motor torque controller controls the torque of at least any one of the motors based on the difference between the estimated torques of the reference motor and other motor, estimate input powers to the reference motor and other motor, or estimated torque constants of the reference motor and other motor. For example, the motor torque controller corrects the control target value of the torque of at least any one of the motors to reduce the difference between the estimated torques of the reference motor and other motor to a desired value. Instead, the motor torque controller corrects the control target value of the input power to at least any one of the motors to reduce the difference between the estimated input powers to the reference motor and other motor to a desired value. Otherwise, the motor torque controller corrects the actual torque constant of at least any one of the motors to reduce the difference between the estimated torque constants of the reference motor and other motor to a desired value. According to the exemplary embodiment of the present invention, therefore, the estimation errors may be eliminated from the estimated parameters so that the motors are controlled accurately.

In addition, given that a permanent magnet synchronous motor is adopted as each of the motors, the parameter estimator calculates magnet fluxes in the motors, and the characteristic difference calculator calculates a difference between the magnet flux of the reference motor and the magnet flux of other motor. In this case, the motor torque controller corrects current values of at least any one of the motors to eliminate a difference between the magnet fluxes of the reference motor and other motor thereby reducing a difference between the torques of the reference motor and other motor resulting from such differences between the magnet fluxes. According to the exemplary embodiment of the present invention, therefore, the estimation errors may be eliminated from the estimated magnet fluxes so that the motors are controlled accurately.

Thus, according to the exemplary embodiment of the present invention, the running stability and the control stability of the vehicle Ve may be improved by controlling the output torques of the motors independently or separately.

## BRIEF DESCRIPTION OF THE DRAWINGS

Features, aspects, and advantages of exemplary embodiments of the present invention will become better understood with reference to the following description and accompanying drawings, which should not limit the invention in any way.

Fig. 1 is a schematic illustration showing a structure of the electric vehicle to which the control system according to the exemplary embodiment of the present invention is applied;
Fig. 2 is a block diagram showing constituent elements of an electronic control unit;
Fig. 3 is a flowchart showing a routine executed by the control system according to the exemplary embodiment of the present invention; and
Fig. 4 is a time chart showing a difference between estimated magnet fluxes of the reference motor and other motor.

## DETAILED DESCRIPTION OF THE PREFERRED EMBODIMENT(S)

Embodiments of the present invention will now be explained with reference to the accompanying drawings. Note that the embodiments shown below are merely examples of the present invention which should not limit a scope of the present invention.

The control system according to the exemplary embodiment of the present invention may be applied to an electric vehicle having a plurality of motors individually serving as a prime mover, and a hybrid vehicle in which a prime mover includes a plurality of motors and an internal combustion engine. In the vehicles of those kind, each of the motors is connected individually to one of wheels, and a drive force established by each of the wheels driven by the motor may be controlled independently by controlling an output torque of each of the motors independently.

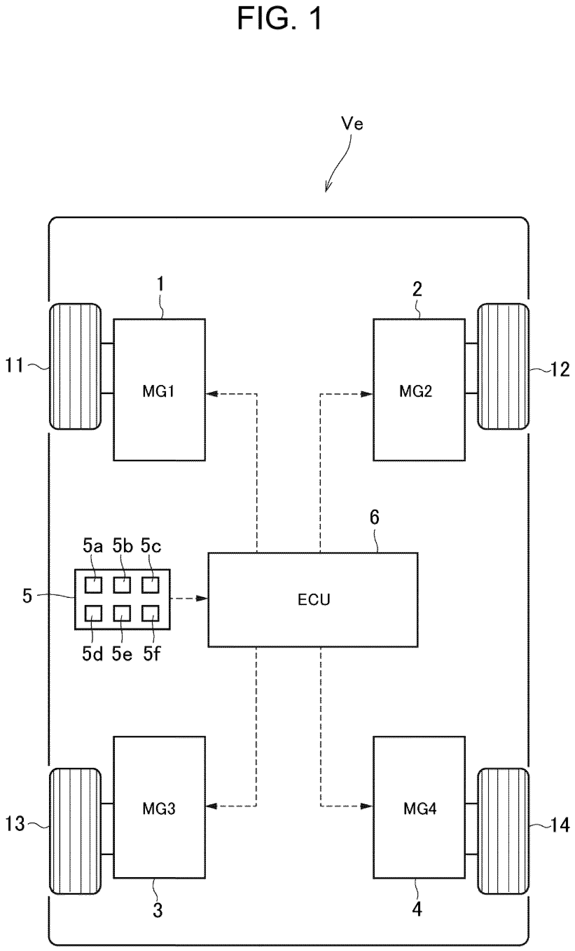

Turning now to Fig. 1, there is shown one example of the electric vehicle (hereinafter simply referred to as the vehicle) Ve to which the control system according to the exemplary embodiment of the present invention is applied. As illustrated in Fig. 1, a first motor (referred to as MG1 in Fig. 1) 1, a second motor (referred to as MG2 in Fig. 1) 2, a third motor (referred to as MG3 in Fig. 1) 3, and a fourth motor (referred to as MG4 in Fig. 1) 4 are arranged in the vehicle Ve. In addition, the vehicle Ve is provided with an electronic control unit (hereinafter abbreviated as ECU) 6 for controlling the vehicle Ve and a detector 5 for collecting various kinds of information about the vehicle Ve.

According to the exemplary embodiment of the present invention, a permanent magnet synchronous motor (i.e., a PM motor) is adopted as each of the motors 1, 2, 3, and 4. That is, each of the motors 1, 2, 3, and 4 is a motor-generator that serves not only as a motor to generate torque when driven by electricity suppled thereto, but also as a generator to generate electricity when rotated by a torque applied thereto. Those motors 1, 2, 3, and 4 are individually connected with a battery through an inverter (neither of which are shown). Therefore, each of the motors 1, 2, 3, and 4 may be operated individually as a motor to generate drive torque to propel the vehicle Ve by supplying electricity to the motors 1, 2, 3, and 4 from the battery. Instead, each of the motors 1, 2, 3, and 4 may also be operated individually as a generator to generate electricity by rotating the motors 1, 2, 3, and 4 by applying torques to the motors 1, 2, 3, and 4 from after-mentioned wheels 11, 12, 13, and 14. In this case, the electricity generated by the motors 1, 2, 3, and 4 may be accumulated in the battery.

Instead, an induction motor without having a permanent magnet may also be adopted as each of the motors 1, 2, 3, and 4. However, the control system according to the exemplary embodiment of the present invention is allowed to control the permanent magnet synchronous motors more accurately rather than the induction motors.

Specifically, the first motor 1 is connected to the left front wheel 11 through a transmission mechanism such as a reduction gear unit (not shown) in a power transmittable manner. Instead, the first motor 1 may also be arranged inside of the left front wheel 11 to be connected directly to the left front wheel 11 so as to serve as an in-wheel motor.

The second motor 2 is connected to the right front wheel 12 through a transmission mechanism such as a reduction gear unit (not shown) in a power transmittable manner. Instead, the second motor 2 may also be arranged inside of the right front wheel 12 to be connected directly to the right front wheel 12 so as to serve as an in-wheel motor.

The third motor 3 is connected to the left rear wheel 13 through a transmission mechanism such as a reduction gear unit (not shown) in a power transmittable manner. Instead, the third motor 3 may also be arranged inside of the left rear wheel 13 to be connected directly to the left rear wheel 13 so as to serve as an in-wheel motor.

The fourth motor 4 is connected to the right rear wheel 14 through a transmission mechanism such as a reduction gear unit (not shown) in a power transmittable manner. Instead, the fourth motor 4 may also be arranged inside of the right rear wheel 14 to be connected directly to the right rear wheel 14 so as to serve as an in-wheel motor.

In order to control the vehicle Ve, the detector 5 collects various kinds of data and information. To this end, the detector 5 includes a power source, a microcomputer, various kinds of sensors, and an input/output interface. For example, according to the exemplary embodiment of the present invention, the detector 5 detects data relating to operating conditions of the vehicle Ve and the motors 1, 2, 3, and 4, and data necessary to estimate characteristics and torques of the motors 1, 2, 3, and 4.

Specifically, the detector 5 includes a wheel speed sensor 5a that detects rotational speeds of the wheels 11, 12, 13, and 14, a motor speed sensor (or resolver) 5b that detects speeds of the motors 1, 2, 3, and 4, a motor torque sensor 5c that detects torques of the motors 1, 2, 3, and 4, a motor current sensor 5d that detects current values of the motors 1, 2, 3, and 4, a motor power sensor 5e that detects input power to the motors 1, 2, 3, and 4, and a temperature sensors 5f that detects temperatures of the motors 1, 2, 3, and 4. In addition, the detector 5 further includes an SOC sensor that detects a state of charge level of the battery, a battery temperature sensor that detects a temperature of the battery, and an inverter temperature sensor that detects a temperature of the inverter (neither of which are shown). The detector 5 is electrically connected with the ECU 6 so that the data detected by the detector 5 is transmitted to the ECU 6 in the form of electric signal.

The ECU 6 is an electronic control unit comprising a microcomputer. According to the exemplary embodiment of the present invention, the ECU 6 is configured to control a drive force to propel the vehicle Ve by controlling the motors 1, 2, 3, and 4. To this end, the ECU 6 performs calculation based on the data transmitted thereto from the detector 5 using data and formulas installed in advance, and transmits calculation results in the form of command signal.

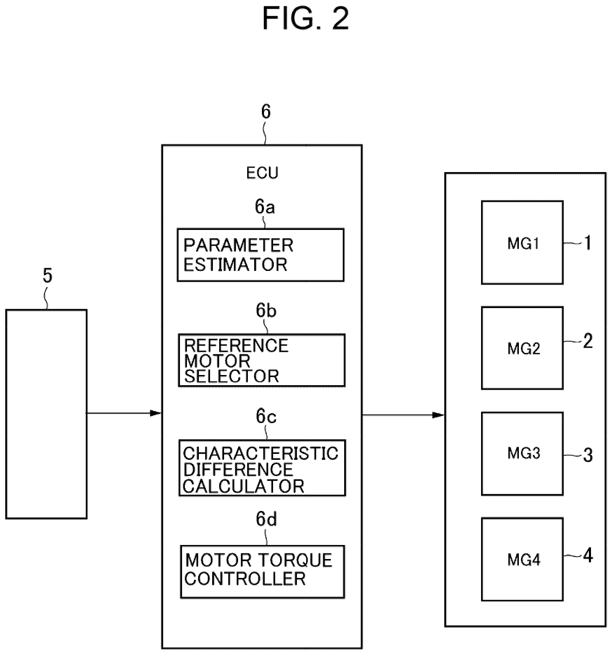

Specifically, as shown in Fig. 2, the ECU 6 comprises a parameter estimator 6a, a reference motor selector 6b, a characteristic difference calculator 6c, and a motor torque controller 6d.

The parameter estimator 6a is configured to calculate estimated parameters of the motors 1, 2, 3, and 4 by a predetermined parameter estimating method such as a regression analysis using an ordinary least squares method, a maximum likelihood estimation method, and a sequential estimation using a sequential least squares method or a Kalman filter. The estimated parameters of the motors 1, 2, 3, and 4 includes output characteristics, torque characteristics, thermal characteristics, changes in magnet fluxes and so on. Specifically, the parameter estimator 6a calculates at least any one of an estimated torque of each of the motors 1, 2, 3, and 4, an estimated input power to each of the motors 1, 2, 3, and 4, an estimated torque constant of each of the motors 1, 2, 3, and 4, and an estimated magnet flux of permanent magnet (not shown) arranged in each of the motors 1, 2, 3, and 4.

The reference motor selector 6b is configured to select a reference motor from the motors 1, 2, 3, and 4. For example, the reference motor selector 6b selects one of the motors 1, 2, 3, and 4 as the reference motor whose estimated parameter is closest to an average value of the estimated parameters calculated by the parameter estimator 6a. Instead, any one of the motors 1, 2, 3, and 4 may also be selected as a regular reference motor.

The characteristic difference calculator 6c is configured to calculate a characteristic difference as a relative difference between the estimated parameter of the reference motor and each of the estimated parameters of other motors. As described, the estimated parameter calculated using the parameter estimation method contains an inevitable estimation error derived from a measurement error and a model error. The effect of such estimation error contained in the estimated parameter may be reduced or eliminated by thus calculating the characteristic difference as a relative difference between the estimated parameter of the reference motor and the estimated parameter of other motor.

The motor torque controller 6d is configured to control the torques of the motors 1, 2, 3, and 4 so as to reduce differences between the torque of the reference motor and each of the torques of other motors resulting from differences between the estimated parameter of the reference motor and each of the estimated parameters of other motors, by correcting predetermined control target values of the motors 1, 2, 3, and 4. For example, the motor torque controller 6d corrects control target values of the torques of the motors 1, 2, 3, and 4 to reduce differences between the estimated torque of the reference motor and each of the estimated torques of other motors, or to reduce differences between the estimated input power to the reference motor and each of the estimated input powers to other motors. Instead, the motor torque controller 6d corrects actual torque constants of the motors 1, 2, 3, and 4 to reduce differences between the estimated torque constant of the reference motor and each of the estimated torque constants of other motors. Alternatively, the motor torque controller 6d corrects current values of the motors 1, 2, 3, and 4 to eliminate differences between the magnet flux of the reference motor and each of the magnet fluxes of other motors thereby reducing differences between the torque of the reference motor and each of the torques of other motors resulting from such differences between the magnet fluxes. By thus calculating the difference between the estimated parameter of the reference motor and the estimated parameters of other motors, the motors 1, 2, 3, and 4 may be controlled accurately while eliminating estimation errors of the parameters.

Although only one ECU 6 is shown in Figs. 1 and 2, a plurality of ECUs 6 may also be arranged in the vehicle Ve to control different devices individually, or to perform different controls individually. In addition, the parameter estimator 6a, the reference motor selector 6b, the characteristic difference calculator 6c, and the motor torque controller 6d are merely named to explain functions of the ECU 6, and the ECU 6 includes a control unit having same functions as the parameter estimator 6a, the reference motor selector 6b, the characteristic difference calculator 6c, and the motor torque controller 6d.

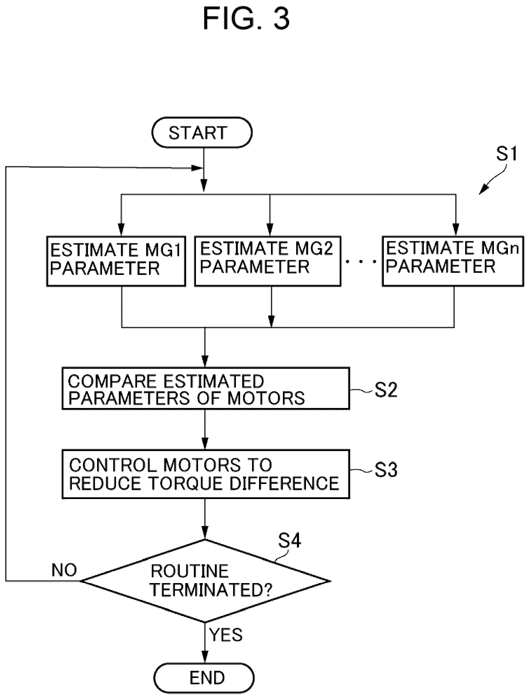

As described, in the vehicle Ve to which the control system according to the exemplary embodiment of the present invention is applied, the drive forces established by the wheels 11, 12, 13, and 14 may be controlled independently by controlling the output torques of the motors 1, 2, 3, and 4 independently. Therefore, the control system according to the exemplary embodiment of the present invention is configured to improve the running stability and the control stability of the vehicle Ve by controlling the output torques of the motors 1, 2, 3, and 4 independently. To this end, the ECU 6 executes the routine shown in Fig. 3.

The routine shown in Fig. 3 is commenced when a power switch, a main switch, or an ignition switch (neither of which are shown) is turned on, and repeated during propulsion of the vehicle Ve. At step S1, parameters of the motors 1, 2, 3, and 4 are estimated. Specifically, at least any one of an estimated torque of each of the motors 1, 2, 3, and 4, an estimated input power to each of the motors 1, 2, 3, and 4, an estimated torque constant of each of the motors 1, 2, 3, and 4, and an estimated magnet flux of each of the motors 1, 2, 3, and 4 is/are calculated using at least any one of the above-explained estimation method(s).

At step S2, the estimated parameter of the reference motor is compared to each of the estimated parameters of other motors. To this end, the reference motor is selected from the motors 1, 2, 3, and 4. For example, the motor whose estimated parameter is closest to an average value of the estimated parameters of the motors 1, 2, 3, and 4 calculated at step S1 may be selected as the reference motor. Instead, any one of the motors 1, 2, 3, and 4 may also be selected as a regular reference motor. In addition, the reference motor may be switched to other motor depending on conditions of the motors 1, 2, 3, and 4 and the vehicle Ve. For example, the motor whose temperature is closest to an average temperature of the motors 1, 2, 3, and 4 may be selected as the regular reference motor. Instead, the motor whose magnet flux is most stable or closest to an average value of the magnet fluxes of the motors 1, 2, 3, and 4 may also be selected as the regular reference motor. Otherwise, the motor positioned at the most appropriate position to control the vehicle Ve in the current running condition may also be selected as the regular reference motor. In the present example being explained, the first motor 1 is selected as the reference motor.

Then, differences between the estimated parameter of the first motor 1 selected as the reference motor and each of the estimated parameters of other motors 2, 3, and 4 are calculated respectively.

For example, given that an estimated magnet flux as a parameter of the "nth" motor is $\text{ø}_n\_est$, and that a true value of the magnet flux is $\text{ø}_n$, the estimated magnet flux as the parameter is affected by an error $e_n$ derived from the estimation model or the formula (e.g., the voltage equation or the motion equation) used to estimate the parameter, as expressed by the following equation

$$\text{ø}_n\_est = \text{ø}_n + e_n.$$

Thus, an absolute accuracy to estimate the parameter is reduced by the error $e_n$.

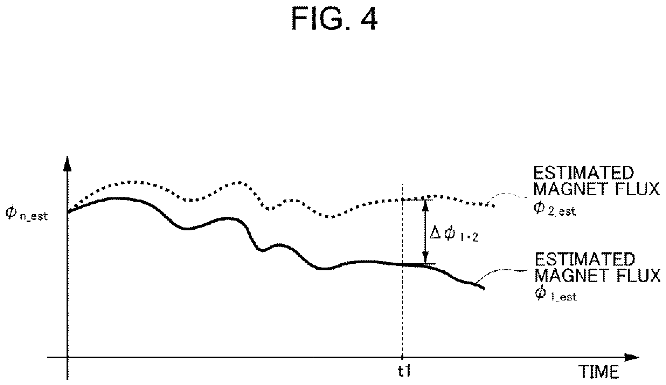

Thereafter, a difference $\Delta\text{ø}_{1,n}$ as a relative difference between the estimated magnet flux $\text{ø}_1\_est$ of the first motor 1 as the reference motor and each of the estimated magnet fluxes $\text{ø}_n\_est$ of other motors 2, 3, and 4 (n = 2, 3, or 4) is calculated respectively. For example, as shown in Fig. 4, a difference $\Delta\text{ø}_{1,2}$ between the estimated magnetic flux $\text{ø}_1\_est$ of the first motor 1 as the reference motor and the estimated magnet flux $\text{ø}_2\_est$

of the second motor 2 at a predetermined time point t1 is calculated.

As described, the error $e_1$ derived from the estimation model or the formula is contained inevitably in the estimated magnetic flux $\phi_1\_$est of the first motor 1. Given that other characteristics of the motors 1, 2, 3, and 4 which are not contained in the estimation model or the formula, e.g., dead times or wire resistances of the motors 1, 2, 3, and 4 are same, errors contained in the estimated magnetic fluxes of all of the motors 1, 2, 3, and are also considered same as expressed by the following equation

$$e_1 = e_2 = e_3 = e_4.$$

That is, effects of the errors on the estimated parameters of the motors 1, 2, 3, and 4 are also same. Accordingly, the relative difference $\Delta\phi_{1\cdot n}$ between the estimated magnet flux $\phi_1\_$est of the first motor 1 as the reference motor and the estimated magnet fluxes $\phi_n\_$est of other motor n (i.e., 2, 3, or 4) may be expressed by the following equation

$$\Delta\phi_{1\cdot n} = \phi_1\_est - \phi_n\_est.$$

Thus, the error $e_1$ $(=e_n)$ is eliminated from the relative difference $\Delta\phi_{1\cdot n}$.

Then, at step S3, the motors 1, 2, 3, and 4 are controlled to reduce each difference between the torque of the first motor 1 as the reference motor and each of the torques of other motors 2, 3, and 4 derived from the difference $\Delta\phi_{1\cdot n}$.

For example, the current values of the motors 1, 2, 3, and 4 are corrected to reduce each difference between the magnet flux of the first motor 1 as the reference motor and each of the magnet fluxes of other motors 2, 3, and 4 derived from the difference $\Delta\phi_{1\cdot n}$. In this case, given that a difference between the magnet flux of the first motor 1 as the reference motor and the magnet flux of e.g., the second motor 2 is $\Delta\phi_{d1\cdot 2}$, a difference $\Delta T$ between the torque of the first motor 1 and the torque of the second motor 2 derived from the difference $\Delta\phi_{d1\cdot 2}$ in the magnetic fluxes may be expressed by the following equation

$$\Delta T = n_p \cdot \Delta\phi_{d1\cdot 2} \cdot i_{q2}$$

where $n_p$ is number of poles, and $i_{q2}$ is a q-axis current of the second motor 2. In this case, therefore, the torque of the second motor 2 is controlled to reduce the difference $\Delta T$ to zero by correcting the current value of the second motor 2.

Thereafter, at step S4, it is determined whether the routine shown in Fig. 3 is terminated. For example, the routine shown in Fig. 3 is terminated when the power switch, the main switch, or the ignition switch is turned off. If the routine shown in Fig. 3 has not yet been terminated so that the answer of step S4 is NO, the routine returns to step S1 to repeat the foregoing steps.

By contrast, if the power switch or the main switch is turned off so that the answer of step S4 is YES, the routine shown in Fig. 3 is terminated.

As described, the control system according to the exemplary embodiment of the present invention is applied to the electric vehicle (including the hybrid vehicle) in which the motors driving the wheels may be controlled independently or separately. The control system according to the exemplary embodiment of the present invention calculates the estimated parameters of the motors 1, 2, 3, and 4 such as output characteristics, torque characteristics, and thermal characteristics of those motors using the conventional parameter estimating method such as the ordinary least squares method and the maximum likelihood estimation method. Then, the control system calculates differences between the estimated parameter of the reference motor selected form the motors 1, 2, 3, and 4 and each of the estimated parameters of other motors. Thereafter, the control system controls the motors 1, 2, 3, and 4 to reduce the differences between the torque of the reference motor and each of the torques of other motors derived from the differences in the estimated parameters. According to the exemplary embodiment of the present invention, therefore, the estimation errors may be eliminated from the estimated parameters so that the torques of the motors 1, 2, 3, and 4 are controlled accurately. For this reason, the drive force to propel the vehicle Ve may be controlled properly.

Thus, according to the exemplary embodiment of the present invention, the running stability and the control stability of the vehicle Ve may be improved by controlling the output torques of the motors 1, 2, 3, and 4 independently or separately.

**Claims**

1. A control system for an electric vehicle (Ve) in which a plurality of motors (1, 2, 3, 4) are connected each to the respective wheels (11, 12, 13, 14), each of the motors (1, 2, 3, 4) generates torque in accordance with its own characteristics, and a drive force established by each of the wheels (11, 12, 13, 14) driven by the motor (1, 2, 3, 4) is controlled independently by controlling an output torque of each of the motors (1, 2, 3, 4) independently,

   **characterized by**:

   a control unit (6) that controls the electric vehicle (Ve) and the motors (1, 2, 3, 4), wherein the control unit (6) comprises:

   a parameter estimator (6a) that is configured to calculate estimated parameters relating to the characteristics of the motors (1, 2, 3, 4) using a predetermined estimation method;

a reference motor selector (6b) that is configured to select a reference motor from the motors (1, 2, 3, 4);

a characteristic difference calculator (6c) that is configured to calculate a relative difference between the estimated parameter of the reference motor (1, 2, 3, 4) and the estimated parameters of other motor (1, 2, 3, 4); and

a motor torque controller (6d) that is configured to control the torque of at least any one of the motors (1, 2, 3, 4) so as to reduce a difference between the torques of the reference motor (1, 2, 3, 4) and other motor (1, 2, 3, 4) resulting from the relative difference between the estimated parameters of the reference motor (1, 2, 3, 4) and other motor (1, 2, 3, 4).

2. The control system for the electric vehicle (Ve) as claimed in claim 1,

wherein the parameter estimator (6a) calculates at least any one of an estimated output torque of each of the motors (1, 2, 3, 4), an estimated input power to each of the motors (1, 2, 3, 4), and an estimated torque constant of each of the motors (1, 2, 3, 4), and

the motor torque controller (6d) corrects predetermined control target values of the motors (1, 2, 3, 4) to reduce the difference between the torques of the reference motor (1, 2, 3, 4) and other motor (1, 2, 3, 4) resulting from a difference between the estimated output torques of the reference motor (1, 2, 3, 4) and other motor (1, 2, 3, 4), between the estimated input powers to the reference motor (1, 2, 3, 4) and other motor (1, 2, 3, 4), or between the estimated torque constants of the reference motor (1, 2, 3, 4) and other motor (1, 2, 3, 4).

3. The control system for the electric vehicle (Ve) as claimed in claim 1 or 2,

wherein a permanent magnet synchronous motor is adopted as each of the motors (1, 2, 3, 4), the parameter estimator (6a) calculates magnet fluxes in the motors (1, 2, 3, 4), the characteristic difference calculator (6c) calculates a difference between the magnet flux of the reference motor (1, 2, 3, 4) and the magnet flux of other motor (1, 2, 3, 4), and the motor torque controller (6d) corrects current values of the motors (1, 2, 3, 4) to eliminate the difference between the magnet fluxes of the reference motor (1, 2, 3, 4) and other motor (1, 2, 3, 4) thereby reducing the difference between the torques of the reference motor (1, 2, 3, 4) and other motor (1, 2, 3, 4) resulting from such differences between the magnet fluxes.

# FIG. 1

# FIG. 2

# FIG. 3

```
                        ┌──────────┐
                        │  START   │
                        └────┬─────┘
                             │                              S1
   ┌─────────────────────────┼──────────────────────────┐   ↙
   │             ┌───────────┼───────────┐              │
   ▼             ▼                        ▼
┌──────────────┐ ┌──────────────┐    ┌──────────────┐
│ESTIMATE MG1  │ │ESTIMATE MG2  │ ···│ESTIMATE MGn  │
│PARAMETER     │ │PARAMETER     │    │PARAMETER     │
└──────┬───────┘ └──────┬───────┘    └──────┬───────┘
       └────────────────┼───────────────────┘
                        ▼
            ┌────────────────────────────┐
            │ COMPARE ESTIMATED          │  S2
            │ PARAMETERS OF MOTORS       │
            └─────────────┬──────────────┘
                          ▼
            ┌────────────────────────────┐
            │ CONTROL MOTORS TO          │  S3
            │ REDUCE TORQUE DIFFERENCE   │
            └─────────────┬──────────────┘
                          ▼              S4
                        ◇───────────◇
              NO      ROUTINE
            ◀───────  TERMINATED?
                        ◇───────────◇
                          │ YES
                          ▼
                     ┌──────────┐
                     │   END    │
                     └──────────┘
```

# FIG. 4

ESTIMATED
MAGNET FLUX
$\phi_{2\_est}$

ESTIMATED
MAGNET FLUX
$\phi_{1\_est}$

$\phi_{n\_est}$

$\Delta\phi_{1\cdot2}$

t1

TIME

## EP 4 578 707 A1

**EUROPEAN SEARCH REPORT**

Application Number

EP 24 21 9489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/348077 A1 (ISHIDA MINORU [JP] ET AL) 3 November 2022 (2022-11-03) | 1,2 | INV. B60L15/20 |
| Y | * paragraphs [0070], [0071], [0081], [0096]; figures 1,2 * | 3 | |
| | ----- | | |
| Y | JP 2010 268566 A (NISSAN MOTOR) 25 November 2010 (2010-11-25) * paragraphs [0034], [0035] * | 3 | |
| | ----- | | |

TECHNICAL FIELDS
SEARCHED      (IPC)

B60L

The present search report has been drawn up for all claims

| Place of search | Date of completion of the search | Examiner |
|---|---|---|
| The Hague | 14 May 2025 | Bellatalla, Filippo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 9489

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | Publication date | Patent family member(s) | Publication date |
|---|---|---|---|
| US 2022348077 A1 | 03-11-2022 | CN 115003544 A<br>US 2022348077 A1<br>WO 2021145270 A1 | 02-09-2022<br>03-11-2022<br>22-07-2021 |
| JP 2010268566 A | 25-11-2010 | NONE | |

For more details about this annex : see Official Journal of the European Patent Office, No. 12/82

**EP 4 578 707 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023220469 A

- JP 3467961 B